# EUROPEAN PATENT SPECIFICATION

(11) **EP 2 017 679 B1**
(45) Date of publication and mention of the grant of the patent: **15.04.2015**
(21) Application number: 08252403.4
(22) Date of filing: 15.07.2008
(51) Int. Cl.: G03G 15/00, G03G 21/02, B41J 2/01, H04L 12/24, G06Q 30/00

(54) **Device, maintenance support apparatus, and support system**
Vorrichtung, Instandhaltungshilfsvorrichtung und Hilfssystem
Dispositif, appareil de support de maintenance et système de support

(30) Priority: 17.07.2007 JP 2007186345; 17.07.2007 JP 2007186346; 17.07.2007 JP 2007186347
(43) Date of publication of application: 21.01.2009
(73) Proprietor: Seiko Epson Corporation, Shinjuku-ku Tokyo 163-0811 (JP)
(72) Inventor: Tanaka, Minoru, Suwa-shi, Nagano-ken, Tokyo 392-8502 (JP); Sasai, Yoji, Suwa-shi, Nagano-ken, Tokyo 392-8502 (JP); Tsuji, Etsuo, Suwa-shi, Nagano-ken, Tokyo 392-8502 (JP)
(74) Representative: Turner, Matthew Lawrence

(56) References cited:
- GB-A- 2 371 129
- US-A1- 2002 028 080
- US-A1- 2002 037 177
- US-A1- 2007 255 628

## Description

### Claim of Priority

The present invention claims priority from Japanese Patent Applications P2007-186345A, P2007-186346A, and P2007-186347A all filed on July 17, 2007.

### BACKGROUND

### 1. Field of the Invention

The present invention relates to a technique of supporting the use of devices by individual users.

### 2. Description

Use-friendly online support methods have been proposed to support the users in the case of abnormalities and failures of various devices including printers and scanners (see, for example, Japanese Patent Publication No. 3716729). The devices as the objects of such online support are generally those without any expendable (for example, scanners) and those allowing frequent refill and replacement of expendables (for example, inkjet printers).

There are, however, other types of devices using expendables, for example, a device designed to restrict refill of an expendable. The prior art techniques have not been fully examined for maintenance and support of these other types of devices. There would thus be a demand for relieving both the user load and the support load in maintenance and support of a device designed to restrict refill of an expendable.

US2002037177A1 discloses an integration density acquiring unit for a consumption information management apparatus which acquires integration density from an image signal sent from an image processing section, and an information converting unit which calculates a quantity of consumed toner (consumption information) by multiplying the integration density by a specified coefficient to send the quantity to a cumulative consumption information calculating unit. The cumulative consumption information calculating unit temporarily stores the information for the quantity of toner consumption in a memory, and reads out the information from the memory at predetermined timing. Accordingly, it is possible to determine only the cost for developer used by a user or calculate the quantity of developer remaining within an image formation apparatus based on the cumulative consumption information for the unadjusted developer stored in the memory.

US2007255628A1 discloses an ordering support system which includes a device monitoring apparatus that retrieves a device information item about a device connected to a network and a status information item about a consumable of the device, determines whether the consumable is depleted based on the status information item, and sends, if the consumable is determined to be depleted, the device information item and the status information item to an ordering support apparatus. The ordering support system further includes the ordering support apparatus that receives the device information item and the status information item from the device monitoring apparatus, creates an electronic mail message including a URL indicating a Web page for ordering the consumable determined to be depleted, and sends the electronic mail message to a pre-registered mail address associated with the device.

### SUMMARY

The present invention accomplishes at least part of the demand mentioned above and other relevant demands by the following configurations applied to the maintenance support apparatus.

The present invention provides a system including a device using an expendable and a support server for supporting the device, which are interconnected via a network;
where the device is an office device such as a printing device comprising:
a device information output module configured to output device information regarding identification of a model of the device and expendable information including a degree of consumption of the expendable via the network,
an expendable replacement mechanism configured such that the replacement of the expendable is restricted and not designed for replacement by a user;
wherein the support server is a maintenance support apparatus, comprising:
an information receiving module configured to receive said office device information,
an information generation module configured to generate device support information relating to the operation of said office device, based on the estimated degree of wear of said office device, and
an information output module configured to output the generated device support information,
the support server is configured to estimate a degree of wear of said office device according to the received device information and the received expendable information, and to estimate an operating performance of said office device as the degree of wear of said office device, and
the information generation module is configured to generate future operating performance information regarding the estimated operating performance, as said office device support information.

Preferably, the information generation module is further configured to generate maintenance cost information representing a maintenance cost of the device as the device support information, based on the estimated degree of wear of the device.

Conveniently, the device is a printing device using ink as the expendable, and
the degree of consumption of the expendable is either a used amount of ink or a remaining amount of ink.

Advantageously, the information receiving module is further configured to receive printing device use information including at least one of: the cumulative number of prints, a period of use, and a cumulative number of carriage passes, in addition to the device information and the expendable information, and
the support server is further configured to estimate the degree of wear of the device according to the receiving device information, the received expendable information, and the received printing device use information.

Preferably, the information generation module is yet further configured to deduce an amount of ink consumed for a maintenance operation of the printing device from the used amount or the remaining amount of the ink as the expendable to determine the maintenance cost of the device.

Conveniently, the information receiving module is provided within a predetermined communication distance via a network from the device, and
the maintenance cost of the device is fixed, regardless of a difference in communication distance from the device.

Advantageously, the information receiving module is further configured to receive device operation information including at least one of a cumulative power supply time of the device, a maintenance record of the device, and a cumulative operation time of the device, in addition to the device information and the expendable information, and
the support server is further configured to estimate the future operating performance of the device as the degree of wear of the device according to the received device information, the received expendable information, and the received device operation information.

Preferably, the information receiving module is further configured to receive the expendable information via a network; and
the information output module is further configured to output the device support information via the network.

The maintenance support apparatus according to this aspect of the invention estimates the operating status of the device according to the expendable information including the degree of consumption of the expendable under restriction of the refill, generates the device support information relating to the operation of the device under restriction of the refill of the expendable based on the estimated operating status of the device, and outputs the generated device support information. The user can thus readily obtain the device support information on the device under restriction of the refill of the expendable.

In one preferable application of the maintenance support apparatus according to the above aspect of the invention, the information generation module generates maintenance cost information representing a maintenance cost of the device as the device support information, based on the estimated operating status of the device.

The maintenance support apparatus of this application readily determines the maintenance cost of the device. The maintenance cost is determined, based on the findings that there is a strong positive correlation between consumption of the expendable and the user's operation status directly affecting the maintenance cost and that a possible factor of breaking this correlation is a sort of luck or some quality variation irrelevant to the user's operation. The device support information may be output to a personal computer of a support center, as well as to a device or a previously registered personal computer (for example, a personal computer of a network administrator).

The maintenance support apparatus of this application determines the maintenance cost of the device by the extremely simple method to be charged for the user's operation induced deterioration of the device. This arrangement desirably reduces the burden for determination of the maintenance cost and enhances the customer satisfaction. The terminology of 'device' means a combination of a device with a personal computer, as well as a device alone.

The present invention is not restricted to the maintenance support apparatus described above, but may be actualized by diversity of other applications, for example, a device as a support object, a support system connected to a device via a network to perform maintenance and support of the device, and a system configured to include a device and a support server interconnected via a network. Other applications also include a corresponding support method, a support control method, computer programs configured to actualize these methods or the functions of the support system or the maintenance support apparatus, as well as diversity of recording media in which such computer programs are recorded.

### BRIEF DESCRIPTION OF THE DRAWINGS

Fig. 1 schematically illustrates the configuration of an online user support system in one embodiment of the invention;
Fig. 2 schematically shows the structure of a printer as a support object in the embodiment;
Fig. 3 shows the structure of a printing mechanism of the printer;
Fig. 4 shows generation of a reference print timing signal PTS;
Fig. 5 shows an arrangement of nozzles Nz on a print head carried on a carriage in the printer;
Fig. 6 shows a conventional printer life cycle;
Fig. 7 shows a first maintenance support scheme in the embodiment;
Fig. 8 shows a second maintenance support scheme in the embodiment;
Fig. 9 shows a third maintenance support scheme in the embodiment;
Fig. 10 is a flowchart showing a user registration process for online support;
Fig. 11 shows a dialog box opened to ask the user for request or non-request of the user's registration for online support;
Fig. 12 is a flowchart showing a registration process into a user support server SV;
Fig. 13 is a table showing a server-side management information;
Fig. 14 is a table showing a printer-side management information;
Fig. 15 is a flowchart showing a maintenance support process executed in the embodiment;
Fig. 16 is a flowchart showing a support request activation process executed in the embodiment;
Fig. 17 shows inquiry windows open to check the requirement or non-requirement for maintenance-relating information query;
Fig. 18 is a flowchart showing a maintenance item specification process executed in the embodiment;
Fig. 19 is a table showing refill and refresh charge determination methods;
Fig. 20 is a table showing repair cost determination methods; and
Fig. 21 is a table showing buyback price determination methods.

### DESCRIPTION OF THE PREFERRED EMBODIMENTS

In order to further elucidate the functions, the advantages, and the effects of the invention, one mode of carrying out the invention is described below in the following sequence as a preferred embodiment with reference to the accompanied drawings:
A. Outline of Device Support System
B. Printing Device as Support Object
C. Maintenance Support Schemes
D. Device Support Registration Process
E. Maintenance Support Process
F. Other Aspects

### A. Outline of Device Support System

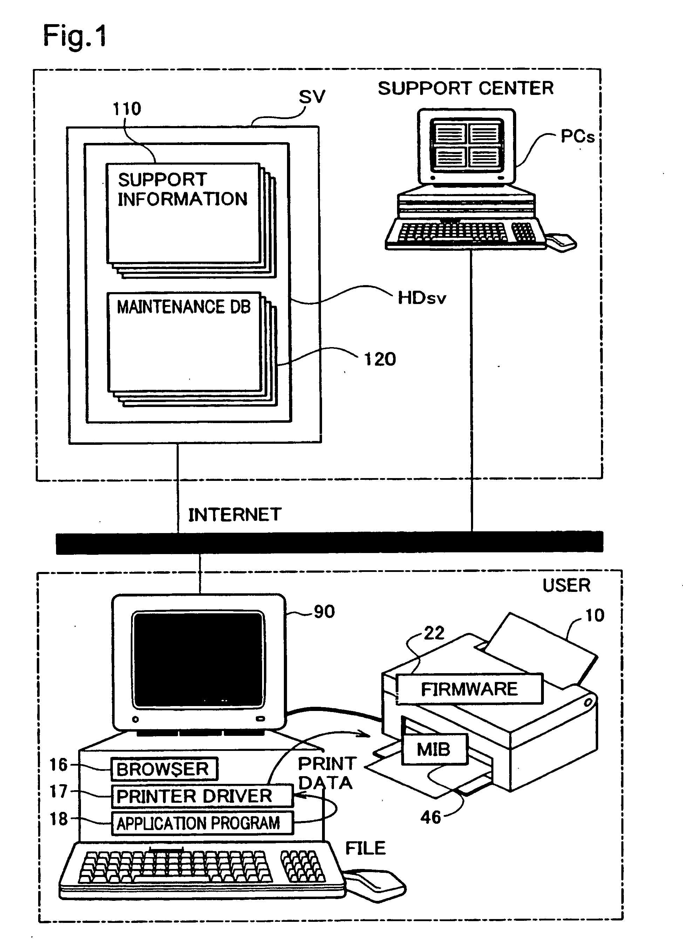

Fig. 1 schematically illustrates the configuration of an online user support system in one embodiment of the invention. The upper half shows the configuration of a support center performing user support, and the lower half shows the configuration of the user's operated client system. The support center includes a user support server SV and a support operator. The user support server SV has a memory area HDsv arranged to store support information 110 including maintenance information and a maintenance database DB 120.

Multiple programs activated on a predetermined operating system (not shown) are installed in a computer 90. Typical examples of such programs include a browser 16 provided to browse Web pages, a printer driver 17 provided to drive the printer 10, and an application program 18 provided to create documents and image data as objects to be printed by the printer 10. In response to the user's requirement for printing, the user's desired file as a printing object and a print command are transferred from the application program 18 to the printer driver 17. The printer driver 17 performs rendering and other required processes for the transferred file and generate print data to be supplied to the printer 10. The printer 10 receives the print data via a communication cable and performs a printing operation.

The printer 10 includes a firmware 22 arranged to control the operations of the printer 10 and an MIB (management information base) 46 as a database for at least printer operating conditions. The computer 90 makes access to the MIB 46 to gain information regarding the operating environment of the printer 10.

### B. Printing Device as Support Object

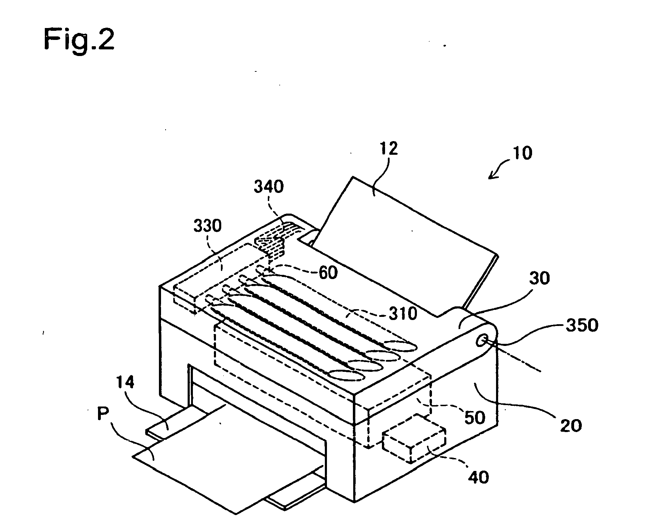

Fig. 2 schematically shows the structure of a printer 10 as a support object in the embodiment. The printer 10 has large-volume fluid packs for ink storage as explained later and is not designed for the user's replacement of ink cartridges (not shown). The printer 10 accordingly does not have a mechanism for replacement of ink cartridges. Namely the printer 10 is designed to restrict refill of expendables.

The printer 10 is an inkjet printer constructed to eject ink droplets and record letters, characters, and graphics on a sheet of printing paper P as a recording medium. The printer 10 includes a main casing 20 to hold therein a printing mechanism 50 provided as a fluid ejection assembly of ejecting ink droplets on the printing paper P. The main casing 20 includes a paper feed tray 12 arranged to introduce the printing paper P inside the main casing 20 to be supplied to the printing mechanism 50 and a catch tray 14 arranged to discharge the printing paper P from the printing mechanism 50 to be taken out of the main casing 20. The detailed structure of the printing mechanism 50 will be explained later.

A controller 40 is incorporated in the main casing 20 to control the respective constituents of the printer 10. In this embodiment, the controller 40 includes ASICs (application specific integrated circuits) equipped with hardware components, such as a CPU, a read only memory (ROM), and a random access memory (RAM). The firmware 22 for actualizing the various functions of the printer 10 is installed in the controller 40.

An upper casing 30 is located above the main casing 20 and is designed as a holder case for multiple ink packs 310 provided to store liquid inks of respective colors. The upper casing 30 is pivotally supported on the main casing 20 to be opened and closed about a pivot shaft 350.

In the embodiment, each of the multiple ink packs 310 is made of a flexible sheet and formed as a substantially rectangular flat bag having a substantially elliptical cross section. An ink outlet 60 is formed on one widthwise side of each ink pack 310 to allow discharge of the ink stored in the ink pack 310. The multiple ink packs 310 are kept obliquely by lifting up their corresponding longitudinal sides to be overlapped with one another. In the printer 10 of this embodiment, four ink packs 310 for storing four different color inks, black, cyan, magenta, and yellow are kept in the upper casing 30. In a printer using six color inks including light cyan and light magenta in addition to the above four colors for printing, six ink packs 310 for storing six different color inks, light cyan and light magenta in addition to the above four color inks, are kept in the upper casing 30.

An ink supply assembly 330 is connected with the ink packs 310 to allow the ink discharge and is provided in the upper casing 30 constructed as an ink supplier to the printing mechanism 50. The ink supply assembly 330 is connected with supply tubes 340 forming fluid flow paths to introduce the ink flows, which are discharged from the ink packs 310 to the ink supply assembly 330, to the printing mechanism 50. The supply tubes 340 are made of a gas-permeable material, for example, a thermoplastic elastomer like olefin or styrene.

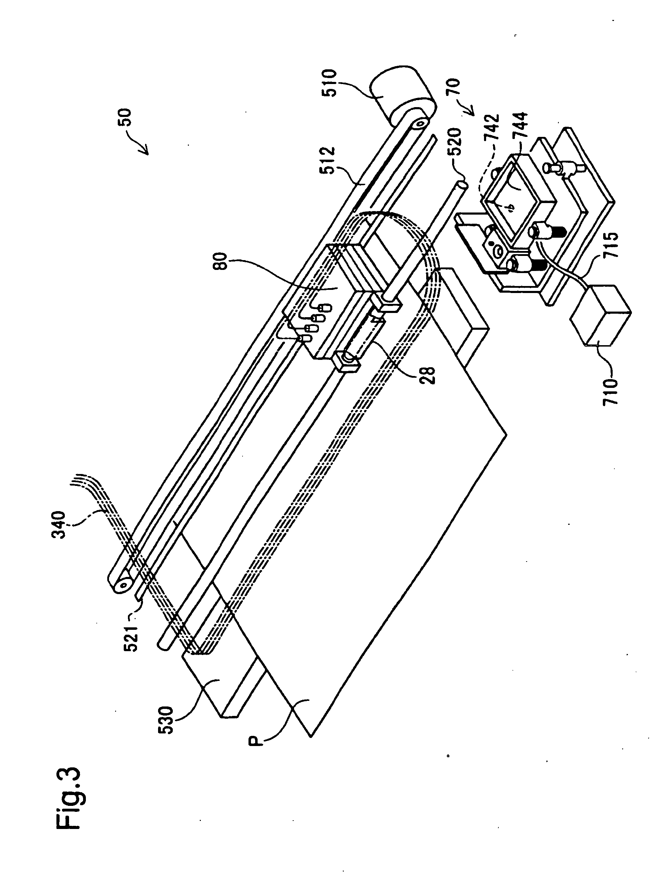

Fig. 3 shows the structure of the printing mechanism 50 in the printer 10. The printing mechanism 50 has a rectangular platen 530 provided in a printable area where ink droplets are ejected to the printing paper P. The printing paper P is fed on the platen 530 by means of a paper feed mechanism (not shown). The printing mechanism 50 has a carriage 80 connected to the supply tubes 340 and equipped with a print head 28. The carriage 80 is supported to be movable in a longitudinal direction of the platen 530 along a guide rod 520 and is driven via a timing belt 512 by a carriage motor 510 as a carriage driving unit. The carriage 80 is accordingly moved back and forth on the platen 530 in its longitudinal direction.

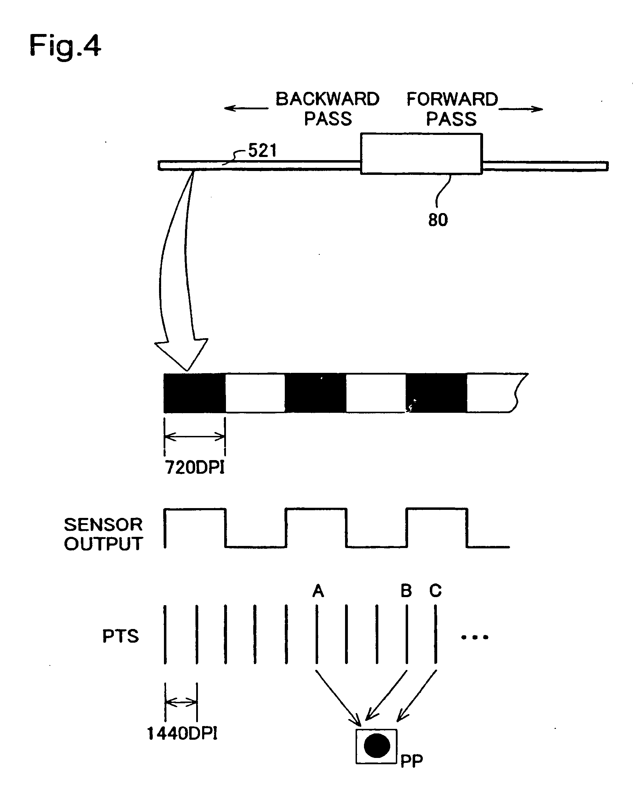

Fig. 4 shows generation of a reference print timing signal PTS. The print timing signal PTS is output to each pixel to instruct start of a driving waveform. As illustrated, the printer 10 has an optical linear scale 521 that is arranged in parallel with the guide rod 520 constructed to support the carriage 80 in a slidable manner and is provided to have black-painted areas at preset equal intervals. The width of each black-painted area is double the resolution of the printer 10 and corresponds to an interval of 720 dpi. The carriage 80 is equipped with an optical sensor (not shown). The optical sensor (not shown) outputs an ON signal in response to facing to each black-painted area and outputs an OFF signal in response to facing to each remaining area, as the carriage 80 moves along the guide rod 520. The on-off sensor output is shown in Fig. 4. The controller 40 detects the position of the carriage 80 on the guide rod 520 according to this sensor output.

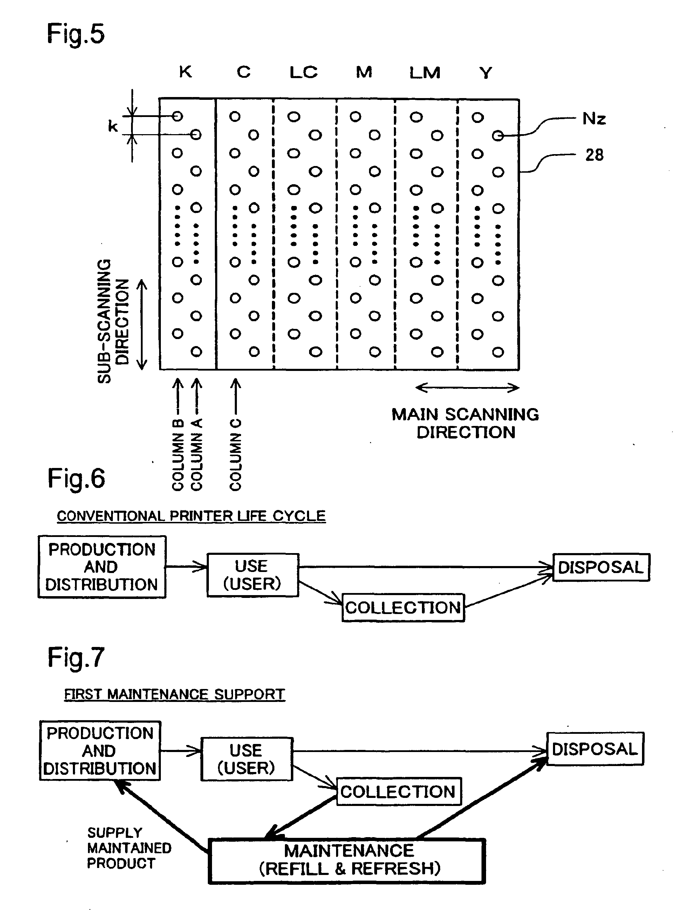

In the printer 10, a small portion of the ink droplets ejected from the print head 28 (see Fig. 5) mounted on the carriage 80 is accumulated in the form of mist on the optical linear scale 521. During mass printing, such ink accumulation gradually makes it difficult to read the optical linear scale 521. Maintenance of wiping out the ink accumulated on the optical linear scale 521 with a solvent is accordingly preferable every after ejection of a preset amount of ink.

Fig. 5 shows an arrangement of nozzles Nz on the print head 28 carried on the carriage 80. The print head 28 has six arrays of nozzles Nz for ejection of six different color inks, black ink (K), cyan ink (C), light cyan link (LC), magenta ink (M), light magenta ink (LM), and yellow ink (Y). The corresponding nozzles Nz in the respective nozzle arrays are located at identical positions in a sub-scanning direction of the print head 28. Each nozzle array has forty eight nozzles Nz arranged in zigzag at a fixed nozzle pitch k in the sub-scanning direction on the print head 28.

The nozzles Nz are formed as small apertures on the print head 28. The long-term non-use of the printer 10 may cause the nozzles Nz to be clogged by the viscosity-increased and solidified ink. In such cases, a maintenance mechanism 70 (see Fig. 3) is activated to suck the ink from the nozzles Nz on the print head 28 and recover the smooth ink flow.

The following series of operations are performed for the ink suction:
(1) moving the carriage 80 to the position of the maintenance mechanism 70 located in a non-printable area, which is out of the printable area with installation of the platen 50;
(2) lifting up a suction cup 744 of the maintenance mechanism 70 by a lift mechanism (not shown) to be in contact with the print head 28 in a sealing manner;
(3) sucking the ink from the print head 28 into an aperture 742 of the suction cup 744 by means of a pump (not shown); and
(4) causing the sucked ink to flow through a hose 715 and to be kept and accumulated in an ink exhaust unit 710 filled with an ink absorbent (not shown).

Maintenance of discharging the ink accumulated in the ink exhaust unit 710 at regular intervals is also required.

### C. Maintenance Support Schemes

Fig. 6 shows a conventional printer life cycle, and Figs. 7 through 9 show maintenance support schemes in the embodiment. In the conventional printer life cycle of Fig. 6, after production and distribution of a printer, the user of the printer is in charge of its maintenance and management. Many printers that are expected to be continuously usable with adequate maintenances are untimely disposed (directly or after collection by distribution outlets) before their service lives.

Fig. 7 shows a first maintenance support scheme in the embodiment. In the first maintenance support scheme, a maintenance agency performs refill and refresh operations and supplies a maintained product to the user. In the specification hereof, the refill operation represents ink refill into the ink pack 310 or replacement of the ink pack 310. The refresh operation represents cleaning of the optical linear scale 521, discharge of ink exhaust from the ink exhaust unit 710 and cleaning of the ink exhaust unit 710, and replacement of a circuit board (not shown) as a time renewal part. When recycling is preferred to the refill and refresh operations from the cost effectiveness point of view, the printer 10 is disposed for recycling.

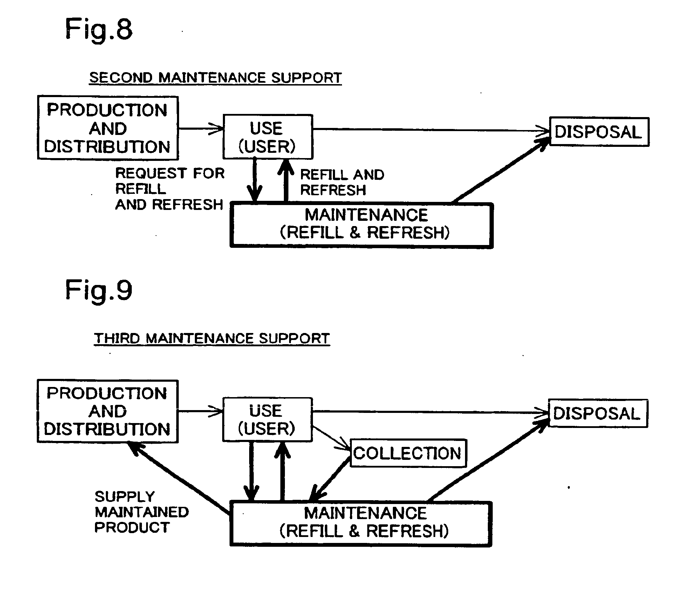

Fig. 8 shows a second maintenance support scheme in the embodiment. In the second maintenance support scheme, the user makes a request for refill and refresh operations to a maintenance agency and receives the printer 10 after the refill and refresh operations. When recycling is preferable, the printer 10 is disposed for recycling with the user's permission.

Fig. 9 shows a third maintenance support scheme in the embodiment. In the third maintenance support scheme, either the first maintenance support scheme is the second maintenance support scheme is selectable in response to the user's selection.

### D. Device Support Registration Process

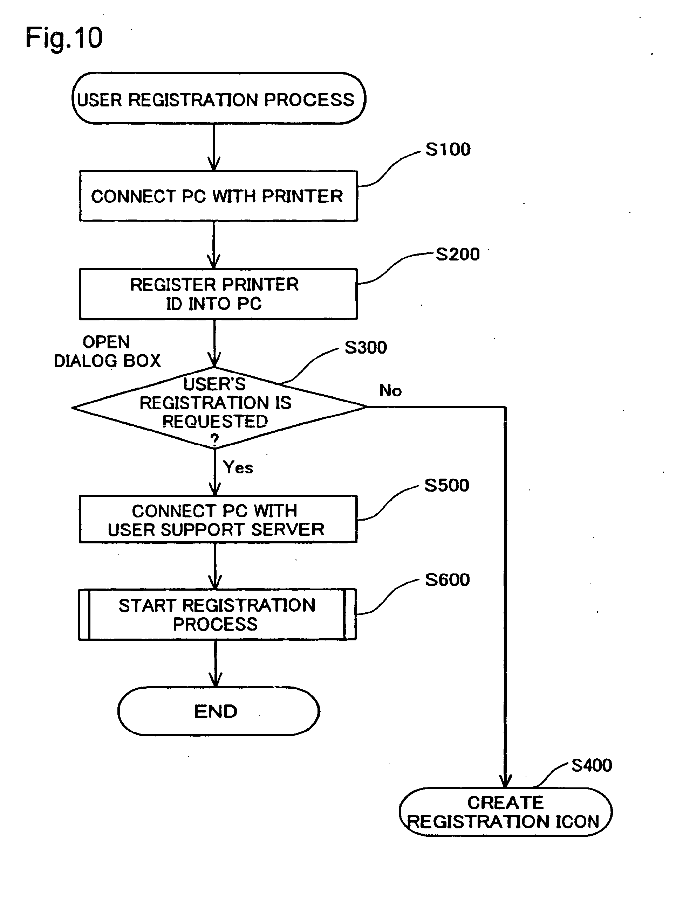

Fig. 10 is a flowchart showing a user registration process for online support. The computer 90 is connected with the printer 10 at step S100. This connection triggers the start of the user registration process for online support. When the printer driver 17 is not installed in the computer 90 at the time of this connection, installation of the printer driver 17 triggers the start of the user registration process for online support.

At step S200, a printer ID is registered in the computer 90. After the registration of the printer ID, a dialog box is opened to ask the user for request or non-request of the user's registration for online support (step S300).

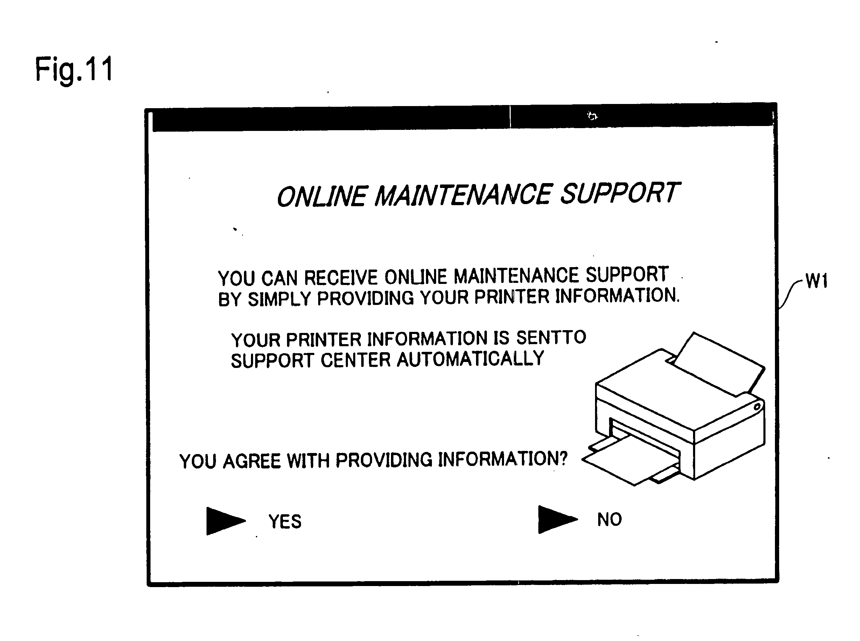

Fig. 11 shows an example of the dialog box opened to ask the user for request or non-request of the user's registration for online support. The dialog box of Fig. 11 asks the user for requirement or non-requirement of the maintenance support. In response to the user's non-request for the registration, the user registration process is terminated after creation of a user registration icon, for example, on the desk top at step S400. The user can start the user's registration at any desired time by simply clicking the user registration icon. In response to the user's request for the registration, on the other hand, the user registration process goes to step S500.

At step S500, the computer 90 is connected with the user support server SV. The printer driver 17 automatically makes this connection by utilizing the printer ID registered in the computer 90. On completion of the connection, registration into the user support server SV starts at step S600.

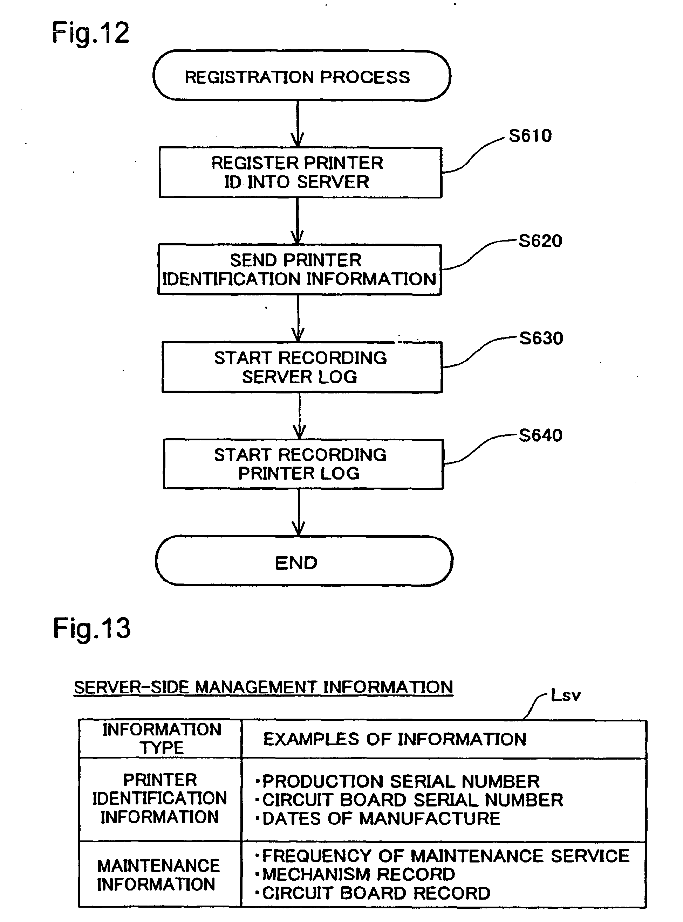

Fig. 12 is a flowchart showing a registration process into the user support server SV. At step S610, the user's printer ID is registered in the user support server SV. A user database is generated based on the registered printer ID for easy customer management.

At step S620, the computer 90 sends printer identification information and maintenance information (see Fig. 13) to the user support server SV. The printer identification information includes several pieces of information regarding identification of the printer 10 itself and its components, for example, a production serial number of the printer 10, a circuit board serial number, and their dates of manufacture. The maintenance information includes several pieces of information, for example, the frequency of maintenance service, a mechanism record (for example, a failure record), and a circuit board record (for example, the cumulative power supply time and the ink ejection time). The printer identification information of the embodiment is equivalent to the 'device information' of the invention.

At step S630, the user support server SV starts recording a server log. As the server log, maintenance information is mainly recorded with time into the memory area HDsv of the user support server SV

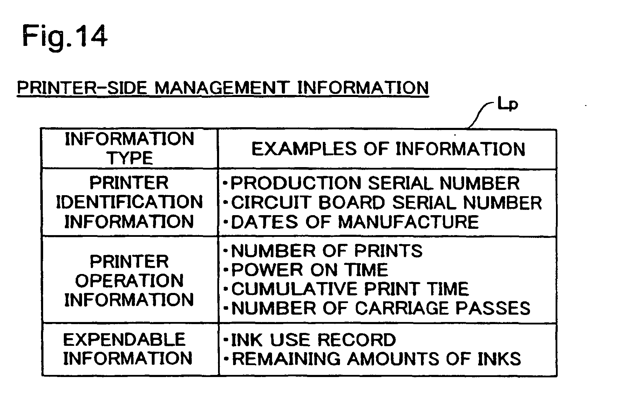

At step S640, the MIB 46 of the printer 10 starts recording a printer log. As the printer log, printer-side management information (see Fig. 14) is recorded with time. The printer-side management information includes printer operation information and expendable information with the printer identification information as a common retrieval key to the server log. The printer operation information includes several pieces of information, for example, the number of prints, the power on time, the cumulative print time, and the number of carriage passes (the frequency of moving the carriage 80). The expendable information includes an ink use record and the remaining amounts of inks. The ink use record includes the number of ink suctions by the maintenance mechanism 70 (see Fig. 3).

### E. Maintenance Support Process

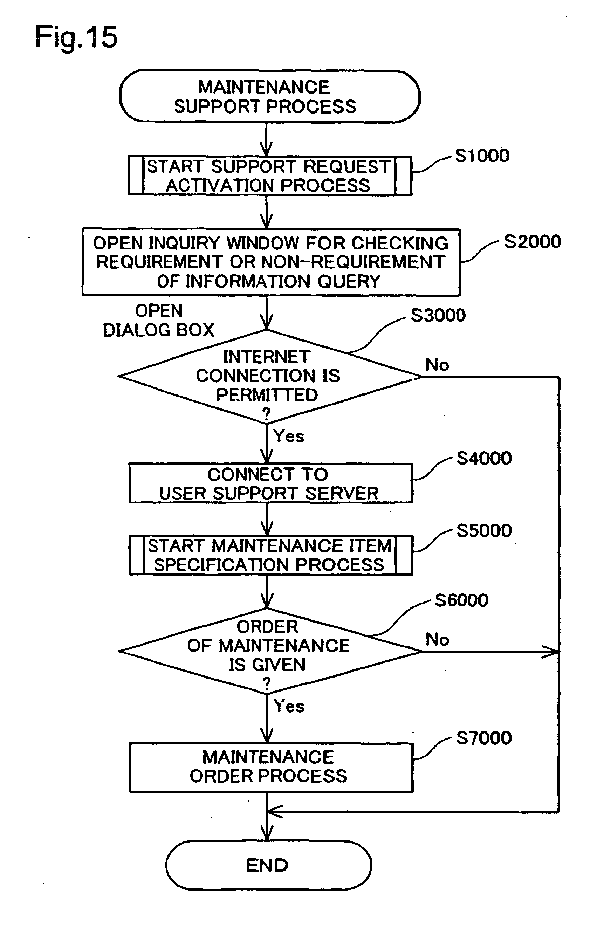

Fig. 15 is a flowchart showing a maintenance support process. At step S1000, the printer 10 performs a support request activation process. The support request activation process triggers the start of the maintenance support process.

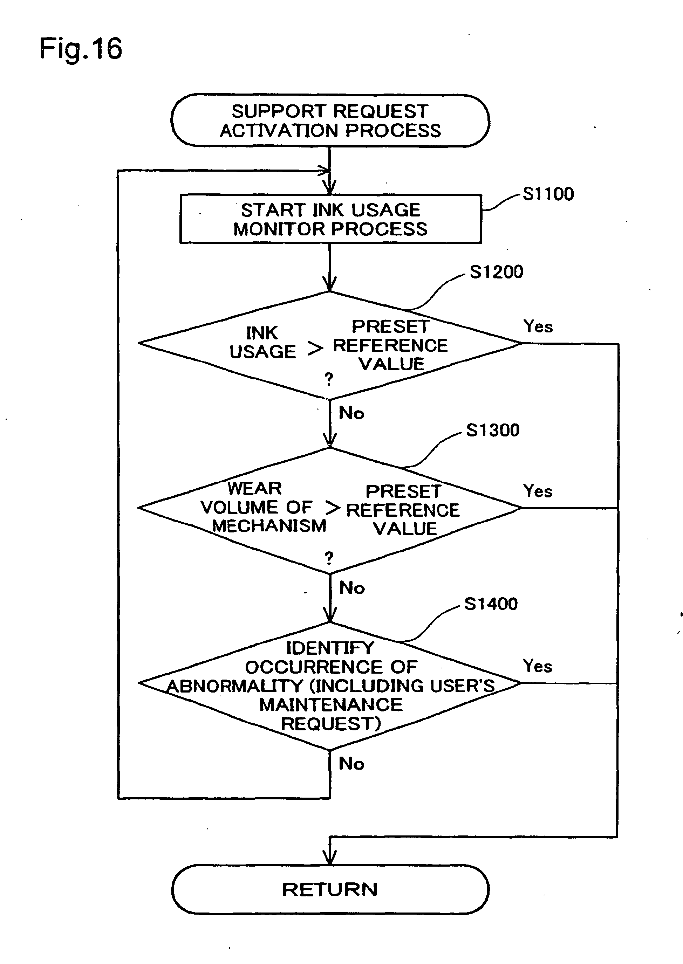

Fig. 16 is a flowchart showing the support request activation process. At step S1100, the printer 10 performs an ink usage monitor process. The ink usage monitor process monitors the amount of ink ejection for printing and the amount of ink exhaust discharged by ink suction. The amount of ink ejection is monitored, for example, according to a known method of counting the number of ink ejections and multiplying the counted number of ink ejections by the size of ink droplets to calculate the ink usage of each color ink as disclosed in Japanese Patent Laid-Open No. 2003-1842. A concrete procedure calculates the ink usage from dot data of each main scanning line or each page stored in a memory (not shown) and serially adds the calculation results. The amount of ink exhaust is calculated, for example, from the number of ink suctions.

At step S1200, the printer 10 determines whether the ink usage exceeds a preset reference value. The ink usage is a trigger of maintenance request of the printer 10, since the following maintenances are required according to the ink usage:
(1) Request for ink refill: The use-up of even one color ink leads to a failure of printing with the printer 10. The request for ink refill is given upon determination of whether the maximum amount of ink ejection among the amounts of the respective color inks used exceeds a preset reference value; and
(2) Request for cleaning of the optical linear scale 521: Accumulation of the ink mist gradually makes it difficult to read the optical linear scale 521. The request for cleaning of the optical linear scale 521 is given upon determination of whether a total amount of the respective color inks used exceeds a preset reference value.

At step S1300, the printer 10 determines whether a wear volume of each mechanism exceeds a preset reference level. The targets of this determination include, for example, a wear volume of a paper feed roller (not shown), and wear volumes of the mechanisms 510, 512, and 520 (see Fig. 3) for driving the carriage 80. The wear volume of the paper feed roller is estimable from, for example, the number of prints (see Fig. 14). The wear volumes of the respective mechanisms 510, 512, and 520 are estimable from, for example, the number of carriage passes (see Fig. 14).

At step S1400, the printer 10 identifies the occurrence of any abnormality. The occurrence of abnormality is identified in the event of internal abnormality detection of the printer 10 or in response to the user's press of a maintenance button (not shown). In response to any of these triggers of maintenance request of the printer 10, the maintenance support process proceeds to step S2000 in Fig. 15.

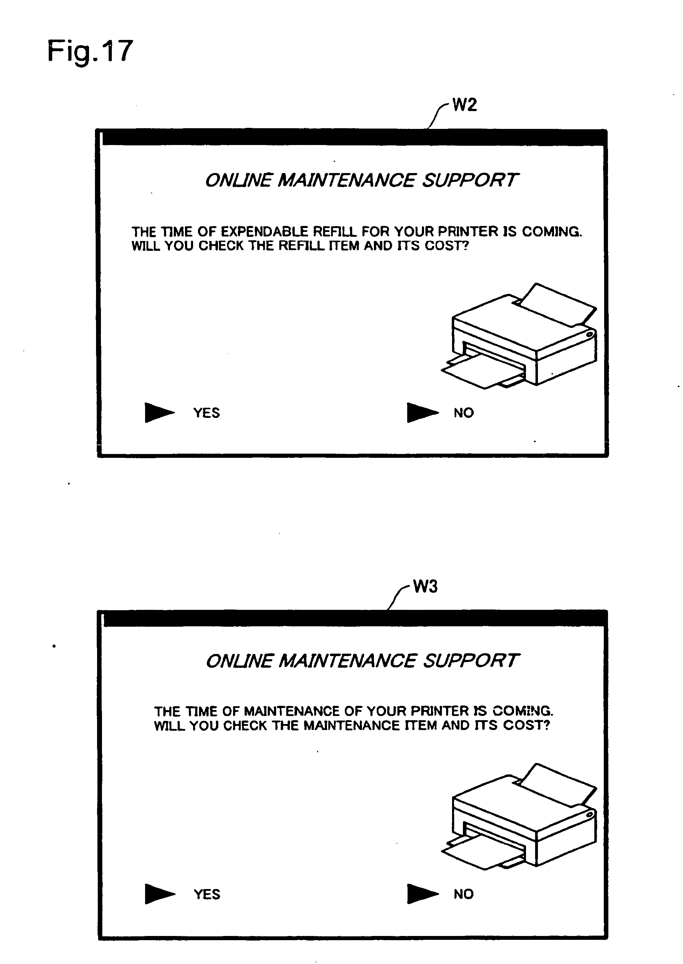

At step S2000, the printer 10 controls the computer 90 to open an inquiry window. The inquiry window is opened to ask the user for permission or rejection of connection to the user support server SV via the Internet (step S3000). Some examples of the inquiry window are shown in Fig. 17. An inquiry window W2 is opened to notify the user of the coming time of expendable refill. An inquiry window W3 is opened to notify the user of the coming time of maintenance. In the event of the user's rejection of the connection to the user support server SV, the maintenance support process is terminated. In the case of the user's permission for the connection to the user support server SV, on the other hand, the maintenance support process proceeds to step S4000.

At step S4000, the printer 10 controls the printer 90 to make connection with the user support server SV. On completion of the connection, the maintenance support process goes to step S5000, at which the user support server SV starts a maintenance item specification process.

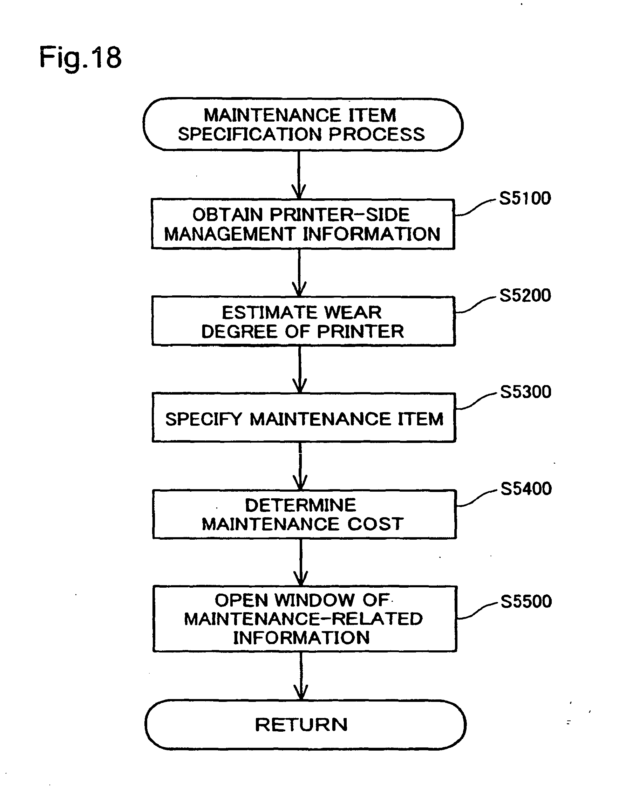

Fig. 18 is a flowchart showing the maintenance item specification process executed in the embodiment. At step S5100, the user support server SV obtains the printer-side management information (see Fig. 14) from the printer 10 via the computer 90.

At step S5200, the user support server SV estimates a wear degree of the printer 10 based on the obtained printer-side management information. The wear degree of the printer 10 includes, for example, the degree of damage of the optical linear scale 521, the requirement or non-requirement for ink refill, the requirement or non-requirement for part replacement of the mechanisms 510, 512, and 520 (see Fig. 3), the amount of ink exhaust accumulated in the ink exhaust unit 710, and the consumption degree of the circuit board (for example, insufficient capacity of a capacitor).

At step S5300, the user support server SV specifies a maintenance item according to the estimated wear degree of the printer 10. The maintenance item to be specified here ranges from simple ink refill to replacement of all consumable parts. At step S5400, the user support server SV determines a maintenance cost of the specified maintenance item according to a simplified calculation method (explained later).

At step S5500, the user support server SV controls the computer 90 to open a window of maintenance-related information (not shown). The maintenance-related information includes the specified maintenance item, the determined maintenance cost, and a maintenance order method.

At step S6000 in the maintenance support process of Fig. 15, the user support server SV accepts the user's order of maintenance. In response to acceptance of the user's order of maintenance, the maintenance support process proceeds to step S7000. When the user does not make an order of maintenance, on the other hand, the maintenance support process is concluded.

At step S7000, the user support server SV starts a maintenance order process. According to a concrete procedure, the user support server SV locks the use of the printer 10 and automatically gives an instruction to a home delivery agency to fetch the printer 10. The use of the printer 10 is locked, with a view to preventing the specified maintenance item and the determined maintenance cost from being varied by the subsequent use after the order. It is preferable to unlock the use of the printer 10 in response to cancellation of the order of maintenance.

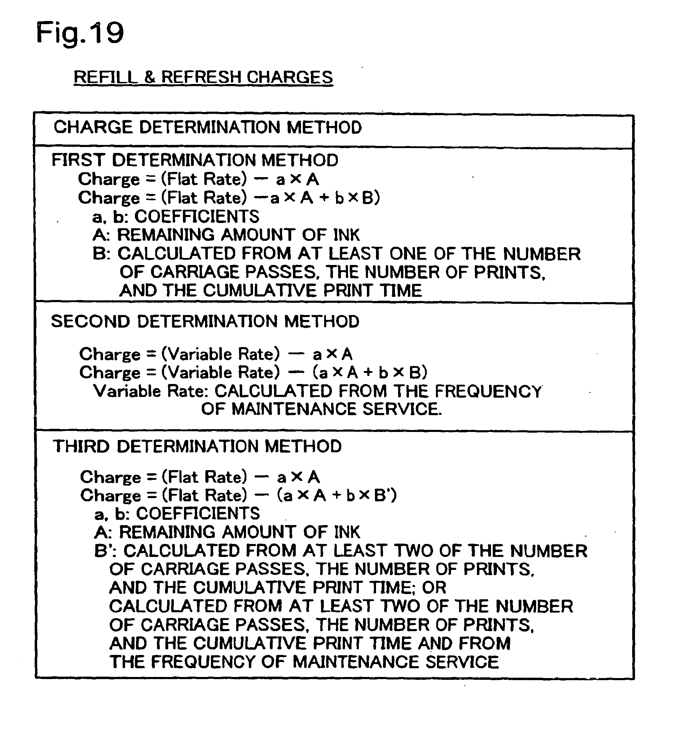

Fig. 19 is a table showing refill and refresh charge determination methods in the embodiment. Three determination methods are given in the example of Fig. 19. A CPU of the user support server SV computes the refill and refresh charges according to calculation formulae stored in the maintenance DB 120 in the memory area HDsv of the user support server SV.
(1) A first determination method deduces a preset rate from a flat rate determined for each model of the printer 10. The deduced rate is set based on the remaining amount of ink and the specific pieces of information relating to the wear volumes of the mechanisms 510, 512, and 520 (see Fig. 3), the circuit board (not shown), and other relevant parts, for example, the number of carriage passes, the number of prints, and the cumulative print time. This determination method increases the deduced rate and accordingly reduces the maintenance cost in the case of the less use of the printer 10.
(2) A second determination method uses a variable rate determined according to the frequency of maintenance service, instead of the flat rate in the first determination method. This determination method decreases the variable rate and accordingly reduces the maintenance cost with an increase in frequency of maintenance service.
(3) A third determination method increases the deduced rate according to the frequency of maintenance service in the first determination method. This determination method increases the deduced rate and accordingly reduces the maintenance cost with an increase in frequency of maintenance service.

Any of these determination methods can easily determine the maintenance cost, regardless of the specified maintenance item, based on the printer-side management information, for example, the number of prints, the power on time, the cumulative print time, the number of carriage passes, the ink use record, and the remaining amounts of inks.

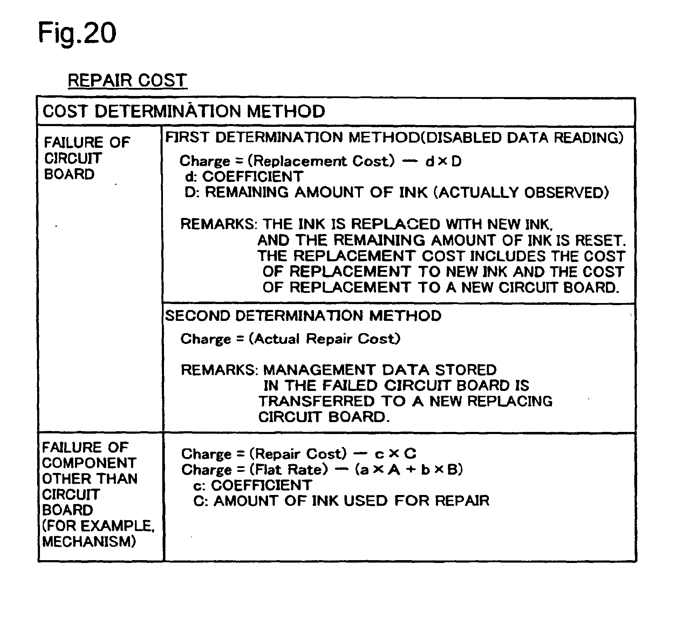

Fig. 20 is a table showing repair cost determination methods in the embodiment. The repair cost determination is classified into the case of failure repair of a circuit board and the case of failure repair of a component other than the circuit board. In the failure repair of a circuit board, different determination methods are adopted according to the enabled or disabled reading of the printer-side management information.

In the case of failure repair of a circuit board, when the printer-side management information is unreadable from the circuit board, a first determination method is adopted to determine the repair cost. The disabled data reading from the circuit board leads to failed confirmation of the sufficient remaining amount of ink. Replacement to new ink is accordingly performed with replacement of the failed circuit board. The repair cost is determined by deducing a rate corresponding to the remaining amount of ink from the cost of the replacing circuit board and the replacing ink. The deduced rate is calculated by multiplying an observed remaining amount D of ink by a predetermined coefficient 'd'. The printer-side management information is reset in this case.

The actual remaining amount of ink is observed, for example, by weighing at the support center. In the online support, the user is notified of the deduced rate after the delivery of the printer 10 to the support center. In the offline support where the user takes the printer 10 to the support center, the user is notified of the deduced rate on site.

In the case of failure repair of a circuit board, when the printer-side management information is readable from the circuit board, on the other hand, a second determination method is adopted to determine the repair cost. The repair cost is given as the actual cost of replacement to a new circuit board. The printer-side management information stored in the failed circuit board is transferred to the replacing new circuit board. A rate corresponding to the remaining amount of ink may be deduced from the actual cost of replacement.

In the case of failure repair of a component other than the circuit board, an determination method may deduce the cost of ink used for the repair from the actual repair cost or may determine the repair cost according to the refill and refresh charge determination method (see Fig. 19).

This determination method pays back the cost of the expendable used for the repair to the user.

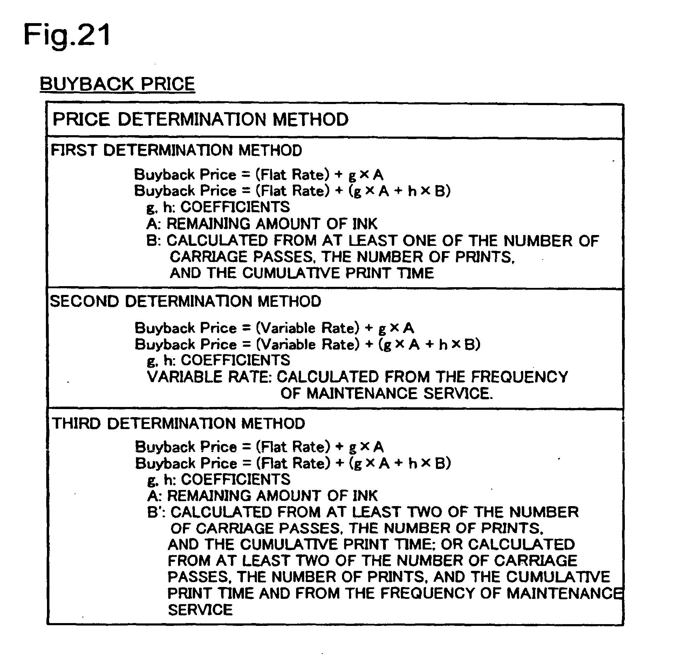

Fig. 21 is a table showing buyback price determination methods. Three determination methods are given in the example of Fig. 21.
(1) A first determination method adds a preset rate to a flat rate determined for each model of the printer 10. The added rate is set based on the remaining amount of ink and the specific pieces of information relating to the wear volumes of the mechanisms 510, 512, and 520 (see Fig. 3), the circuit board (not shown), and other relevant parts, for example, the number of carriage passes, the number of prints, and the cumulative print time. This determination method increases the added rate and accordingly increases the buyback price in the case of the less use of the printer 10.
(2) A second determination method uses a variable rate determined according to the frequency of maintenance service, instead of the flat rate in the first determination method. This determination method increases the variable rate and accordingly increases the buyback price with an increase in frequency of maintenance service to the well-maintained status.
(3) A third determination method increases the added rate according to the frequency of maintenance service in the first determination method. This determination method increases the added rate and accordingly increases the buyback price with an increase in frequency of maintenance service.

The system of the embodiment automatically specifies the maintenance item and determines its cost according to the printer-side management information. The user can thus adequately and easily select an optimum option among available operations including repair, disposal for recycling, refill, and refresh. This arrangement ensures adequate maintenance and management of the printer 10 and accelerates recycling of the printer 10, thus easily and effectively attaining both the cost reduction and the resource saving.

### F. Other Aspects

The embodiment discussed above is to be considered in all aspects as illustrative and not restrictive. There may be many modifications, changes, and alterations without departing from the scope or spirit of the main characteristics of the present invention. Any of the constituents included in the system of the embodiment other than those commonly found in all the independent claims are additional elements and may be omitted according to the requirements.

F-1. In the embodiment described above, the refill and refresh charges and the buyback price are easily determined according to the printer-side management information, for example, the number of prints, the power on time, the cumulative print time, the number of carriage passes, the ink use record, and the remaining amounts of inks, irrespective of the specified maintenance item. One modification may determine the refill and refresh charges and the buyback prices according to the specified maintenance item or according to the combination of the printer-side management information with the specified maintenance item.

F-2. In the embodiment described above, the refill and refresh charges and the buyback price are determined according to the various pieces of information included in the printer-side management information. One modification may determine the refill and refresh charges and the buyback price according to only the usage of an expendable. This is because there is a strong positive correlation between consumption of the expendable and the user's operation status directly affecting the maintenance cost. As is found by the inventor's experience, a possible factor of breaking this correlation is a sort of luck or some quality variation irrelevant to the user's operation. Based on such finding, this determination method enhances the customer satisfaction.

F-3. A rate calculated according to remaining amount information representing the remaining amount of an expendable under restriction of refill may be deduced from a predetermined maintenance cost. This arrangement gives an adequate and easy deduction of the maintenance cost to the user having the less use of a device, thus reducing the burden for determination of the maintenance cost and enhancing the customer satisfaction.

F-4. The system of the above embodiment identifies the requirement or non-requirement for maintenance of a device and determines the cost of maintenance. Such information may be used to estimate the operating status of the device. The future operating cost of the device is predictable from the required timing of maintenance and the maintenance cost.

The operating status of device is estimated according to the expendable information representing consumption of an expendable under restriction of refill. The maintenance cost of the device is easily determined from this estimated operating status. Namely the future operating performance of the device is predictable according to the expandable information. Device support information including future operating performance information on the predicted future operating performance may be generated and sent to the user to effectively support the user's decision on the requirement of maintenance or renewal of the device. This arrangement provides the user with the adequate service or the adequate replacement of a product, thus enhancing the customer satisfaction.

F-5. The embodiment regards the online maintenance support system. An offline apparatus may alternatively be used to attain similar offline maintenance support. In the offline maintenance support, the circuit board of the printer 10 detached from the printer 10 or attached to the printer 10 is connected with the offline apparatus for data reading and writing. The use of the offline apparatus is free from potential troubles of the online support, for example, illegal acquisition of information or falsification of information. The circuit board is preferably designed by a specific interface or encryption to prohibit any illegal or unauthorized access.

F-6. In the embodiment described above, the various pieces of device-related information are sent to the support center. If there is only one support center in the nation, the maintenance cost may be varied according to the user's residential location. In one practical application, multiple information receiving stations or multiple support centers or service stations may be provided to receive required pieces of information from individual devices or to give the actual support to the users based on the received information. In this application, the device-related information may be sent to the nearest support center to each user. The user can thus receive the uniform support, irrespective of the residential location. This arrangement provides the user with the sense of security and the convenience.

F-7. In the embodiment described above, the maintenance cost is determined from the actually obtained pieces of information. When sufficient pieces of maintenance-related information for statistical treatment have been collected previously, the maintenance cost may be determined by the statistical treatment. The statistical procedure specifies a trouble requiring maintenance and refers to the collected previous data in a statistical manner to determine the maintenance cost. An average or a median of the previous data may be used for determination of the maintenance cost. The actual cost of each maintenance operation may be different from the determined cost for the maintenance operation. The statistical treatment, however, enables the total determined maintenance cost to be sufficiently approximate to the total actual maintenance cost. This arrangement statistically balances the required maintenance cost and thus averages the user's financial burden.

F-8. One preferable procedure may fix the maintenance cost or may waive the maintenance cost for a preset period since the start of a device. The device designed to restrict refill of an expendable is generally expected to be stably used for a certain time period without refill or replacement of the expendable. From the user's standpoint, the fixed-rate or free maintenance support is desirable when some maintenance is required during this time period.

All changes within the meaning and range of equivalency of the claims are intended to be embraced therein. The scope of the present invention is not restricted by any of the embodiment and its modified examples but are indicated by only the appended claims.

## Claims

1. A system including a device using an expendable and a support server for supporting the device, which are interconnected via a network;
where the device is an office device such as a printing device comprising:
a device information output module configured to output device information regarding identification of a model of the device and expendable information including a degree of consumption of the expendable via the network,
an expendable replacement mechanism configured such that the replacement of the expendable is restricted and not designed for replacement by a user;
wherein the support server is a maintenance support apparatus, comprising:
an information receiving module configured to receive said office device information,
an information generation module configured to generate device support information relating to the operation of said office device, based on the estimated degree of wear of said office device, and
an information output module configured to output the generated device support information,
the support server is configured to estimate a degree of wear of said office device according to the received device information and the received expendable information, and to estimate an operating performance of said office device as the degree of wear of said office device, and
the information generation module is configured to generate future operating performance information regarding the estimated operating performance, as said office device support information.

2. The system of claim 1, wherein the information generation module is further configured to generate maintenance cost information representing a maintenance cost of the device as the device support information, based on the estimated degree of wear of the device.

3. The system of claim 2, wherein the device is a printing device using ink as the expendable, and
the degree of consumption of the expendable is either a used amount of ink or a remaining amount of ink.

4. The system of any one of claims 1-3, wherein the information receiving module is furher configured to receive printing device use information including at least one of: the cumulative number of prints, a period of use, and a cumulative number of carriage passes, in addition to the device information and the expendable information, and
the support server is further configured to estimate the degree of wear of the device according to the receiving device information, the received expendable information, and the received printing device use information.

5. The system of claim 4, wherein the information generation module is yet further configured to deduce an amount of ink consumed for a maintenance operation of the printing device from the used amount or the remaining amount of the ink as the expendable to determine the maintenance cost of the device.

6. The system of claim 1 or claim 2, wherein the information receiving module is provided within a predetermined communication distance via a network from the device, and
the maintenance cost of the device is fixed, regardless of a difference in communication distance from the device.

7. The system of claim 1, wherein the information receiving module is further configured to receive device operation information including at least one of a cumulative power supply time of the device, a maintenance record of the device, and a cumulative operation time of the device, in addition to the device information and the expendable information, and
the support server is further configured to estimate the future operating performance of the device as the degree of wear of the device according to the received device information, the received expendable information, and the received device operation information.

8. The system of claim 1, wherein the information receiving module is further configured to receive the expendable information via a network; and
the information output module is further configured to output the device support information via the network.

## Patentansprüche

1. System, beinhaltend eine Vorrichtung, welche ein Verbrauchsmaterial und einen Hilfsserver zum Unterstützen der Vorrichtung verwendet, die über ein Netz miteinander verbunden sind;
wobei die Vorrichtung eine Bürovorrichtung ist, wie eine Druckvorrichtung, umfassend:
ein Vorrichtungsinformationsausgabemodul, das zur Ausgabe von Vorrichtungsinformationen bezüglich einer Identifizierung eines Modells der Vorrichtung und von Verbrauchsmaterialinformationen, die einen Konsumgrad des Verbrauchsmaterials über das Netz beinhalten, gestaltet ist
einen Verbrauchsmaterialaustauschmechanismus, der so dass gestaltet ist, dass der Austausch des Verbrauchsmaterials eingeschränkt ist und nicht für einen Austausch durch einen Anwender bestimmt ist;
wobei der Hilfsserver ein Instandhaltungshilfsgerät ist, umfassend:
ein Informationsempfangsmodul, das zum Empfangen der Bürovorrichtungsinformationen gestaltet ist,
ein Informationsgenerierungsmodul, das zum Generieren von Vorrichtungshilfsinformation bezüglich des Betriebs der Bürovorrichtung basierend auf dem geschätzten Verschleißgrad der Bürovorrichtung gestaltet ist, und
ein Informationsausgabemodul, das zum Ausgeben der generierten Vorrichtungshilfsinformationen gestaltet ist,
wobei der Hilfsserver zum Schätzen eines Verschleißgrades der Bürovorrichtung anhand der empfangenen Vorrichtungsinformationen und der empfangenen Verbrauchsmaterialinformationen und zum Schätzen einer Betriebsleistung der Bürovorrichtung als den Verschleißgrad der Bürovorrichtung gestaltet ist, und
das Informationsgenerierungsmodul zum Generieren zukünftiger Betriebsleistungsinformationen bezüglich der geschätzten Betriebsleistung als die Bürovorrichtungshilfsinformationen gestaltet ist.

2. System nach Anspruch 1, wobei das Informationsgenerierungsmodul des Weiteren zum Generieren von Instandhaltungskosteninformationen, die die Instandhaltungskosten der Vorrichtung darstellen, als die Vorrichtungshilfsinformationen basierend auf dem geschätzten Verschleißgrad der Vorrichtung gestaltet ist.

3. System nach Anspruch 2, wobei die Vorrichtung eine Druckvorrichtung ist, welche Tinte als das Verbrauchsmaterial verwendet, und
der Konsumgrad des Verbrauchsmaterials entweder eine verwendete Menge von Tinte oder eine verbleibende Menge von Tinte ist.

4. System nach einem der Ansprüche 1-3, wobei das Informationsempfangsmodul des Weiteren zum Empfangen von Druckvorrichtungsverwendungsinformationen, die zumindest eines von: der gesamten Zahl von Drucken, eines Verwendungszeitraums und einer gesamten Zahl von Schlittenarbeitsgängen enthalten, zusätzlich zu den Vorrichtungsinformationen und den Verbrauchsmaterialinformationen gestaltet ist, und
der Hilfsserver des Weiteren zum Schätzen des Verschleißgrades der Vorrichtung anhand der empfangenen Vorrichtungsinformationen, der empfangenen Verbrauchsmaterialinformationen und der empfangenen Druckvorrichtungsverwendungsinformationen gestaltet ist.

5. System nach Anspruch 4, wobei das Informationsgenerierungsmodul des Weiteren zum Ableiten einer Menge an für einen Instandhaltungsbetrieb der Druckvorrichtung verbrauchter Tinte von der verwendeten Menge oder der verbleibenden Menge der Tinte als das Verbrauchsmaterial gestaltet ist, um die Instandhaltungskosten der Vorrichtung zu bestimmen.

6. System nach Anspruch 1 oder Anspruch 2, wobei das Informationsempfangsmodul innerhalb einer vorbestimmten Kommunikationsdistanz über ein Netz zu der Vorrichtung bereitgestellt ist, und
die Instandhaltungskosten der Vorrichtung festgesetzt sind, ungeachtet einer Differenz in der Kommunikationsdistanz zu der Vorrichtung.

7. System nach Anspruch 1, wobei das Informationsempfangsmodul des Weiteren um Empfangen von Vorrichtungsbetriebsinformationen, die zumindest eines von gesamter Stromversorgungszeit der Vorrichtung, einer Instandhaltungsaufzeichnung der Vorrichtung und einer gesamten Betriebszeit der Vorrichtung beinhalten, zusätzlich zu der Vorrichtungsinformationen und der Verbrauchsmaterialinformation gestaltet ist, und
der Hilfsserver des Weiteren zum Schätzen der zukünftigen Betriebsleistung der Vorrichtung als den Verschleißgrad der Vorrichtung anhand der empfangenen Vorrichtungsinformation, der empfangenen Verbrauchsmaterialinformationen und der empfangenen Vorrichtungsbetriebsinformationen gestaltet ist.

8. System nach Anspruch 1, wobei das Informationsempfangsmodul des Weiteren zum Empfangen der Verbrauchsmaterialinformationen über ein Netzwerk gestaltet ist; und
das Informationsausgabemodul des Weiteren zum Ausgeben der Vorrichtungshilfsinformationen über das Netz gestaltet ist.

## Revendications

1. Système comprenant un dispositif utilisant un consommable et un serveur de support pour supporter le dispositif, lesquels sont interconnectés via un réseau ;
le dispositif étant un dispositif de bureau, tel un dispositif d'impression, comprenant .
un module de sortie d'information sur le dispositif configuré pour faire sortir une information sur le dispositif concernant l'identification d'un modèle du dispositif et une information sur le consommable comprenant un degré de consommation du consommable via le réseau,
un mécanisme de remplacement de consommable configuré de manière à ce que le remplacement du consommable soit restreint et non conçu pour le remplacement par un utilisateur ;
le serveur de support étant un appareil de support de maintenance, comprenant :
un module de réception d'information configuré pour recevoir ladite information sur le dispositif de bureau,
un module de génération d'information configuré pour générer de l'information de support du dispositif concernant le fonctionnement dudit dispositif de bureau, sur la base du degré estimé d'usure dudit dispositif de bureau, et
un module de sortie d'information configuré pour faire sortir l'information de support du dispositif générée, le serveur de support étant configuré pour estimer un degré d'usure dudit dispositif de bureau en fonction de l'information sur le dispositif reçue et l'information sur le consommable reçue, et pour estimer une performance de fonctionnement dudit dispositif de bureau en tant que degré d'usure dudit dispositif de bureau, et
le module de génération d'information étant configuré pour générer de l'information de performance de fonctionnement future concernant la performance de fonctionnement estimée, en tant que ladite information de support du dispositif de bureau.

2. Système selon la revendication 1, le module de génération d'information étant en outre configuré pour générer de l'information sur le coût de maintenance représentant un coût de maintenance du dispositif, en tant qu'information de support du dispositif, sur la base du degré estimé de l'usure du dispositif.

3. Système selon la revendication 2, dans lequel le dispositif est un dispositif d'impression utilisant de l'encre en tant que consommable, et
le degré de consommation du consommable étant soit une quantité d'encre utilisée, soit une quantité d'encre résiduelle.

4. Système selon l'une quelconque des revendications 1-3, le module de réception d'information étant en outre configuré pour recevoir de l'information sur l'utilisation du dispositif d'impression comprenant au moins l'un/une d'entre : le nombre cumulé d'impressions, une période d'utilisation, un nombre cumulé de passages du chariot, en plus de l'information sur le dispositif et de l'information sur le consommable, et
le serveur de support étant en outre configuré pour estimer le degré d'usure du dispositif en fonction de l'information sur le dispositif de réception, de l'information sur le consommable reçue et de l'information sur l'utilisation du dispositif d'impression reçue.

5. Système selon la revendication 4, le module de génération d'information étant en outre également configuré pour la déduction d'une quantité d'encre consommée pour une opération de maintenance du dispositif d'impression d'après la quantité utilisée, ou la quantité résiduelle de l'encre en tant que consommable afin de déterminer le coût de maintenance du dispositif.

6. Système selon la revendication 1 ou la revendication 2, le module de réception d'information étant fourni dans les limites d'une distance de communication via un réseau prédéterminée par rapport au dispositif, et
le coût de maintenance du dispositif étant fixe, indépendamment d'une différence de distance de communication par rapport au dispositif.

7. Système selon la revendication 1, le module de réception d'information étant en outre configuré pour recevoir de l'information sur le fonctionnement du dispositif comprenant au moins l'un d'entre un temps cumulé d'alimentation en puissance du dispositif, un enregistrement de maintenance du dispositif et un temps cumulé de fonctionnement du dispositif, en plus de l'information sur le dispositif et de l'information sur le consommable, et
le serveur de support étant en outre configuré pour estimer une performance de fonctionnement future du dispositif en tant que degré d'usure du dispositif en fonction de l'information sur le dispositif reçue, de l'information sur le consommable reçue et de l'information sur le fonctionnement du dispositif reçue.

8. Système selon la revendication 1, le module de réception d'information étant en outre configuré pour recevoir l'information sur le consommable via un réseau ; et
le module de sortie d'information étant en outre configuré pour faire sortir l'information de support du dispositif via le réseau.
